# FASCICULE DE BREVET EUROPEEN

(11) **EP 2 766 643 B1**
(45) Date de publication et mention de la délivrance du brevet: **14.06.2017**
(21) Numéro de dépôt: 12780240.3
(22) Date de dépôt: 11.10.2012
(51) Int. Cl.: F16J 15/08, F16L 23/20

(54) **AGENCEMENT D'UN JOINT D'ETANCHEITE A CONTACT CONIQUE DANS UNE GORGE TRAPEZOÏDALE**
ANORDNUNG EINER SCHRÄGKONKTAKTDICHTUNG IN EINER TRAPEZFÖRMIGEN NUT
ARRANGEMENT OF AN OBLIQUE-CONTACT SEAL IN A TRAPEZOIDAL GROOVE

(30) Priorité: 14.10.2011 FR 1159311
(43) Date de publication de la demande: 20.08.2014
(73) Titulaire: Snecma, 75015 Paris (FR); Centre National d'Etudes Spatiales, 75039 Paris Cedex 01 (FR)
(72) Inventeur: BRANCHET-COHEN, Christelle, Léa, F-77550 Moissy Cramayel Cedex (FR); LENAIN, Karine, Sandra, Christel, F-77550 Moissy Cramayel Cedex (FR)
(74) Mandataire: Ahner, Philippe
(86) Numéro de dépôt international: PCT/FR2012/052315
(87) Numéro de publication internationale: WO 2013/054050

(56) Documents cités:
- EP-A1- 0 851 158
- EP-A1- 1 420 161
- FR-A1- 2 726 879

## Description

### DOMAINE TECHNIQUE

L'invention concerne l'installation d'un joint biconique, c'est-à-dire dont la section est en forme de "V" couché, ouvert radialement vers l'intérieur, dans une gorge trapézoïdale.

L'invention concerne plus particulièrement l'installation d'un joint biconique d'étanchéité statique pour le raccordement de deux conduits par brides.

### ÉTAT DE LA TECHNIQUE ANTÉRIEURE

Afin de garantir une bonne étanchéité de l'assemblage et du raccordement de deux conduits l'un avec l'autre, il est connu de réaliser cet assemblage par l'intermédiaire d'un système à brides permettant de serrer axialement les extrémités des conduits l'une contre l'autre et d'utiliser un joint entre les deux extrémités des conduits.

Le joint utilisé est un joint du type biconique, dont la section axiale est en forme de V couché, et il est installé dans une gorge trapézoïdale de manière telle que l'extrémité libre de chaque aile du V est en appui contre une paroi inclinée de la gorge.

Le document FR 2.726.879 décrit un tel joint biconique qui est installé dans une gorge à section trapézoïdale.

Selon ce document, il est connu d'installer le joint avec un jeu radial "minimum" entre le talon et le fond de la gorge lors de la mise en place du joint dans le logement.

Ensuite, lorsque les deux brides sont serrées l'une avec l'autre, le joint est comprimé axialement et se déforme de sorte que le talon se déforme lui aussi pour venir en contact avec le fond de la gorge.

Par conséquent, selon ce document, en fonctionnement, c'est-à-dire que le joint est monté dans la gorge annulaire, et pas seulement positionné dans la gorge, le talon du joint est en contact avec le fond de la gorge.

Du fait des tolérances dimensionnelles de fabrication des brides et du joint, l'écartement axial des faces latérales de la gorge, sur lesquelles les ailes du joint sont en appui, peut varier.

Ainsi, la valeur initiale de la compression axiale du joint n'est pas déterminée de manière fiable, de sorte que le joint peut être compressé de manière trop importante ou insuffisamment, nuisant alors à l'étanchéité de l'assemblage.

Il en résulte que l'étanchéité n'est pas assurée de manière optimale par un tel agencement.

L'invention a pour but de proposer un agencement d'un joint biconique dans une gorge annulaire permettant d'améliorer l'étanchéité obtenue.

### EXPOSÉ DE L'INVENTION

L'invention propose un agencement d'un joint annulaire biconique à section en forme de V couché, dans une gorge annulaire à section en forme de trapèze dont la petite base du trapèze correspond au fond cylindrique de la gorge et qui est ouverte radialement vers l'intérieur au niveau de la grande base du trapèze, dans lequel le joint comporte un talon annulaire radialement externe et deux ailes annulaires globalement coniques s'étendant radialement vers l'intérieur depuis le talon dont l'extrémité radiale interne de chaque aile est en appui axial contre une paroi associée de la gorge,
caractérisé en ce que le joint est monté dans la gorge de manière que le talon du joint est situé radialement à distance du fond de la gorge annulaire.

Un tel jeu radial permet un déplacement radial du joint dans la gorge, afin de compenser d'éventuels écarts dimensionnels des composants de l'agencement.

De préférence, le joint est apte à se dilater ou se comprimer radialement dans la gorge de manière telle que le talon du joint est continuellement à distance du fond de la gorge. L'agencement comporte une butée cylindrique agencée au niveau de l'ouverture de la gorge, contre laquelle le joint est apte à venir en butée radialement vers l'intérieur.

De préférence, la butée est réalisée venue de matière avec l'une des deux parois de la gorge.

De préférence, la butée est un élément rapporté sur l'une des deux parois de la gorge.

De préférence, la butée est agencée radialement au niveau de l'ouverture annulaire de la gorge.

De préférence, la distance axiale entre une face d'extrémité axiale de l'extrémité radiale interne de chaque aile et un plan radial médian du joint est de environ 1,14 fois la distance radiale entre une face d'extrémité radiale externe du talon et une face d'extrémité radiale interne de ladite extrémité radiale libre de chaque aile.

De préférence, le diamètre externe du joint est égal à environ 500 millimètres.

De préférence, la face conique axialement interne de chaque aile est inclinée d'un angle d'environ 41 degrés par rapport à une direction axiale et la face conique axialement externe de chaque aile est inclinée d'un angle A2 d'environ 45 degrés par rapport à un plan radial.

L'invention propose aussi un assemblage étanche d'une première bride annulaire avec une deuxième bride annulaire de manière telle que les brides sont en contact axialement l'une avec l'autre, par rapport à un axe principal commun, au niveau de faces d'appui radiales respectives, les brides délimitant une gorge annulaire ouverte radialement vers l'intérieur, dont la section de la gorge, selon un plan radial est en forme de trapèze globalement isocèle, dont la petite base du trapèze constitue une génératrice d'un fond cylindrique de la gorge, la grande base du trapèze correspond à l'ouverture de la gorge, au niveau de laquelle la gorge est débouchante radialement et dont chaque côté du trapèze forme une paroi de la gorge qui est formée dans l'une des deux brides annulaires,

caractérisé en ce qu'il comporte un joint agencé dans ladite gorge annulaire selon un agencement conforme à l'invention.

### BRÈVE DESCRIPTION DES DESSINS

D'autres caractéristiques et avantages de l'invention apparaîtront à la lecture de la description détaillée qui va suivre pour la compréhension de laquelle on se reportera aux dessins annexés dans lesquels :
- la figure 1 est une représentation schématique d'un assemblage de deux conduits par brides dans lequel un joint biconique est agencé conformément à l'invention ;
- la figure 2 est un détail à plus grande échelle de l'agencement du joint dans la gorge tels que représentés à la figure 1 ;

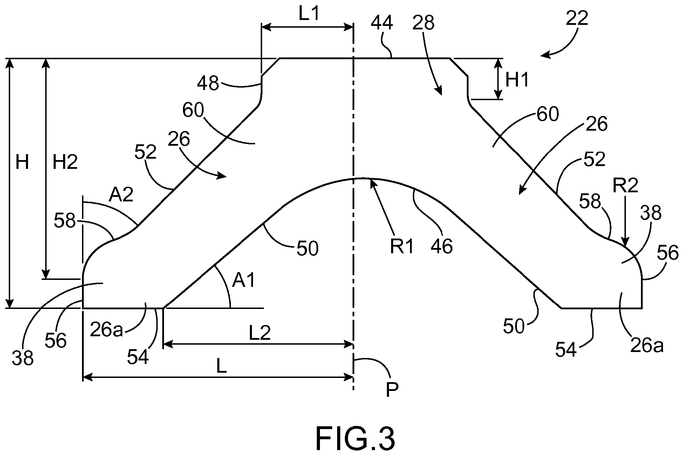

- la figure 3 est une section du joint biconique représenté à la figure 1.

### EXPOSÉ DÉTAILLÉ DE MODES DE RÉALISATION PARTICULIERS

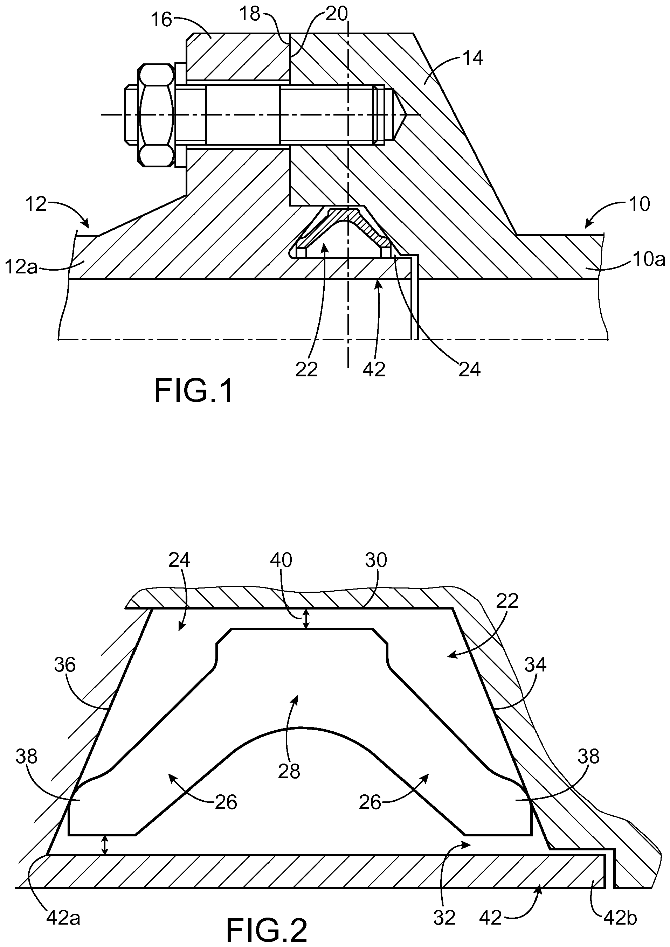

On a représenté à la figure 1 le raccordement étanche de deux conduits 10, 12 à leurs extrémités 10a, 12a en vis-à-vis par un assemblage à brides.

Chaque extrémité 10a, 12a d'un tube 10, 12 porte une bride 14, 16 qui est apte à être fixée à la bride 16, 14 associée portée par l'autre tube 12, 10, ici par vissage.

Chaque bride 14, 16 s'étend radialement vers l'extérieur par rapport à l'extrémité 10a, 12a du tube 10, 12 associé, et elle comporte une face globalement radiale d'appui 18, 20 située en vis-à-vis de la face d'appui 20, 18 de l'autre bride 16, 14.

Les brides 14, 16 sont ainsi aptes à venir en contact et en appui axialement l'une contre l'autre par leurs faces d'appui 18, 20 respectives.

Pour améliorer l'étanchéité de la liaison entre les extrémités 10a, 12a des tubes 10, 12, l'assemblage comporte un joint d'étanchéité 22 qui est interposé axialement entre les deux brides 14, 16 et qui est reçu dans une gorge 24 aménagée à cet effet.

Le joint 22 est un joint annulaire biconique c'est-à-dire qu'il comporte deux portions coniques 26 formant les ailes du joint 22 qui sont superposées axialement et raccordées par un talon annulaire 28.

Le joint 22 et la gorge 24 sont orientés de manière que lorsqu'une différence de pression est appliquée entre l'intérieur et l'extérieur des tubes, la pression la plus importante est appliquée sur la partie interne concave du joint.

Ainsi, comme on l'a représenté ici, la partie interne concave du joint 22 est orientée radialement vers l'intérieur de manière que la pression la plus importante est située à l'intérieur des tubes.

Selon une variante de réalisation, la pression la plus importante est appliquée à l'extérieur des tubes, le joint 22 et la gorge 24 sont alors orientés de manière que la partie interne concave du joint 22 est orientée radialement vers l'extérieur.

Comme on peut le voir plus en détails à la figure 2, les ailes 26 sont raccordées par le talon 28 au niveau de leur bord 26e de plus grand diamètre, de manière telle que la section du joint 22 est en forme de V inversé, c'est-à-dire ouvert radialement vers l'intérieur.

La section axiale de la gorge 24 qui reçoit le joint 22 est en forme de trapèze dont les bases 30, 32 sont parallèles à l'axe principal des conduits 10, 12 et dont les côtés 34, 36 du trapèze sont inclinés par rapport aux bases 30, 32.

Aussi, la gorge 24 est réalisée de manière telle que la grande base 32 du trapèze est située à la cote radiale interne de la gorge 24 et la petite base 30 du trapèze est à la cote radiale externe de la gorge 24.

La gorge 24 est ouverte au niveau de la grande base 32 du trapèze et la petite base 30 du trapèze correspond ainsi au fond de la gorge 24.

Ici, la section axiale de la gorge 24 est en forme de trapèze isocèle, c'est-à-dire que les côtés 34, 36 du trapèze sont symétriques par rapport à un plan radial médian de la gorge 24.

La gorge 24 est en outre réalisée de manière telle que chaque côté 34, 36 du trapèze appartient à l'une des deux brides 14, 16. Les côtés 34, 36 du trapèze correspondent aux parois latérales de la gorge 24 qui sont par conséquent coniques.

Le fond 30 de la gorge 24 est quand à lui réalisé dans une seule des deux brides, ici la bride 14 représentée à droite des figures.

Le joint 22 est reçu dans la gorge 24 de manière telle que les extrémités libres des ailes 26, c'est-à-dire les extrémités radiales internes 26a des ailes 26, sont en appui contre les parois inclinées 34, 36 de la gorge 24.

L'extrémité libre 26a de chaque aile 26 comporte une lèvre en saillie 38 qui est apte à venir en appui contre la paroi latérale 34, 36 de la gorge 24 en vis-à-vis.

Lorsqu'une pression est appliquée sur la partie interne concave du joint 22, cette pression se répartit sur les faces associées des ailes 26 du joint 22, ici les faces radialement internes, de manière à produire un effort d'appui des extrémités libres 26a des ailes contre les parois inclinées 34, 36 de la gorge 24.

Cette pression se répartit aussi sur la face radialement interne du talon 28, produisant alors un effort déformant radialement le talon 28 vers l'extérieur.

Du fait de tolérances dimensionnelles de fabrication des brides 14, 16 et du joint 22, la distance axiale entre les parois inclinées 34, 36 de la gorge peut varier d'un assemblage à un autre ou bien la dimension axiale du joint 22 peut varier elle aussi.

De tels écarts dimensionnels ont pour conséquence une variation générale de la position radiale du joint 22 dans la gorge 24 pour que les extrémités libres des ailes 26 viennent correctement en appui contre les parois inclinées de la gorge 24.

Il peut résulter de cette variation de position radiale du joint 22 que le talon 28 du joint 22 vienne en appui contre le fond 30 de la gorge 24, empêchant alors que les extrémités libres 26a des ailes 26 viennent correctement en appui contre les parois inclinées 34, 36 de la gorge 24.

A cet effet, selon l'invention, les dimensions du joint 22 et de la gorge 24 sont définies de manière telle que le talon 28 du joint 22 est situé radialement à distance du fond 30 de la gorge annulaire 24, lorsque les brides 14, 16 sont fixées l'une avec l'autre et que le joint 22 est monté dans la gorge 24.

Ainsi, un jeu radial 40 est présent entre le talon 28 du joint 22 et le fond 30 de la gorge 24 ce jeu étant constamment non nul, quelles que soient les conditions de fonctionnement de l'assemblage, que ce soit de la différence de pression entre l'intérieur et l'extérieur des conduits 10, 12, la température ou la dilatation des différents composants.

Ce jeu radial 40 non nul permet une dilatation radiale du joint 22 en fonction de la différence de pressions, pour adapter la compression axiale du joint 22 dans la gorge 24 et ainsi conserver une étanchéité optimale de la liaison des deux conduits 10, 12.

Lors de cette variation de la dilatation radiale du joint 22, c'est-à-dire lors d'une augmentation de diamètre ou lors d'une réduction du diamètre, le jeu 40 est toujours non nul, c'est-à-dire que le talon 28 est toujours à distance du fond 30 de la gorge 24, permettant une autre variation de la dilatation radiale du joint 22 en cas de variation de la différence de pressions.

L'agencement est particulièrement adapté à un ensemble de grand diamètre, par exemple de l'ordre de 500mm.

Pour faciliter l'assemblage, notamment pour empêcher que le joint 22 ne sorte de la gorge 24 avant que les deux brides soient assemblées, l'agencement comporte une butée radiale 42 qui est montée sur l'une des deux brides 14, 16.

La butée radiale 42 est située axialement au niveau de l'ouverture 32 de la gorge 24, correspondant à la grande base du trapèze.

De préférence, la butée radiale 42 recouvre entièrement l'ouverture 32 de la gorge 24, c'est-à-dire qu'elle s'étend radialement en vis-à-vis de l'ouverture 32 et les deux extrémités de la butée radiale 42 sont situées axialement de part et d'autre de la gorge 24.

La butée 42 comporte une première extrémité 42a par laquelle la butée 42 est fixée à une première bride 16, ici la bride 16 située à gauche des figures, et la butée comporte une deuxième extrémité 42b qui est située au niveau de l'autre bride 14, au-delà de la gorge 24.

La deuxième extrémité 42b de la butée 42 est située à distance de la dite autre bride 14, définissant ainsi un conduit de révolution raccordant le volume interne des conduits 10, 12 au volume interne de la gorge 24.

La bride 42 assure alors, outre le blocage en position du joint 22 dans la gorge 24, une protection du joint contre les produits circulant dans les conduits 10, 12.

Selon un mode de réalisation préféré de la butée 42, celle-ci est réalisée venue de matière avec la bride 16 à laquelle la butée 42 est fixée.

Selon une variante de réalisation, la butée 42 est un élément rapporté sur la bride 16, qui est fixée par tout moyen connu, notamment par vissage.

Le talon 28 comporte une face cylindrique externe 44, une face annulaire interne 46 et une face axiale externe 48.

Chaque aile 26 s'étend radialement vers l'intérieur depuis le talon 28 et elle est inclinée par rapport à un plan radial médian P du joint 22 de manière telle que la cote axiale de la base 60 de l'aile 26, qui est l'extrémité radialement externe de l'aile 26, est inférieure à la cote axiale de l'extrémité libre 26a de l'aile 26, qui est l'extrémité radialement interne de l'aile 26.

L'aile 26 est délimitée par une face conique axialement interne 50 qui prolonge axialement vers l'intérieur la face annulaire interne 46 du talon 28, une face conique axialement externe 52 qui est reliée à la face axiale externe 48 du talon 28 et une face globalement cylindrique 54 d'extrémité radiale interne.

La lèvre 38 comporte une face radiale d'extrémité axiale externe 56 et une face d'extrémité radiale externe 58. La face d'extrémité radiale externe 58 de la lèvre 38 est de forme arrondie et convexe et son rayon de courbure R2 est sensiblement égal à 0,15 fois la hauteur radiale H du joint 22.Lorsque le joint 22 est monté dans la gorge associée, la face d'extrémité radiale externe 58 de la lèvre 38 est en appui globalement axialement vers l'extérieur et radialement vers l'extérieur, c'est-à-dire ici de façon inclinée vers le haut contre une paroi 34, 36 en vis-à-vis de la gorge.

Les dimensions du joint 22 sont définies notamment par son diamètre externe, la hauteur radiale H et la largeur axiale L du joint 22.

Le diamètre externe du joint 22 est égal à environ 500 millimètres.

La hauteur radiale H du joint 22 est la distance radiale entre la face cylindrique externe 44 du talon 28 et la face cylindrique d'extrémité radiale interne 54 de chaque aile 26.

La longueur axiale L du joint 22 est la distance entre la face d'extrémité axiale externe 56 d'une lèvre 38 et le plan radial médian P du joint 22.

Selon l'invention, la longueur axiale L est égale à 1,14 fois la hauteur radiale H.

Les dimensions du talon 28 sont définies par la longueur axiale L1, correspondant à la distance entre la face radiale externe 48 du talon et le plan radial médian P, et la hauteur radiale H1 du talon 28, correspondant à la longueur radiale de la face radiale externe 48 du talon 28.

Ici, la longueur axiale L1 du talon 28 est sensiblement égale à 0,42 fois la hauteur radiale H du joint 22 et la hauteur radiale H1 du talon 28 est sensiblement égale à 0,19 fois la hauteur radiale H du joint 22.

Aussi, les dimensions de chaque aile 26 sont définies par la distance axiale L2 entre le bord axialement interne 38 de la face cylindrique 54 d'extrémité radiale interne de l'aile 26 et le plan radial médian P. Ici, la distance axiale L2 est sensiblement égale à 0,81 fois la hauteur radiale H du joint 22.

La hauteur H2 correspondant à la distance radiale entre la face cylindrique externe 44 et l'extrémité radialement externe de la face radiale d'extrémité axiale externe 56 de la lèvre 38 est sensiblement égale à 0,89 fois la hauteur radiale H du joint 22.

En outre, la face conique axialement interne 50 de chaque aile est inclinée d'un angle A1 d'environ 41 degrés par rapport à une direction axiale et la face conique axialement externe 52de chaque aile 26 est inclinée d'un angle A2 d'environ 45 degrés par rapport à un plan radial.

La face annulaire interne 46 du talon est de forme arrondie et son rayon de courbure R1 est sensiblement égal à 0,56 fois la hauteur radiale H du joint 22.

## Revendications

1. Agencement d'un joint (22) annulaire biconique à section en forme de V couché, dans une gorge (24) annulaire à section en forme de trapèze dont la petite base (30) du trapèze correspond au fond cylindrique de la gorge (24) et qui est ouverte radialement vers l'intérieur au niveau de la grande base (32) du trapèze,
dans lequel le joint (22) comporte un talon (28) annulaire radialement externe et deux ailes (26) annulaires globalement coniques s'étendant radialement vers l'intérieur depuis le talon (28) dont l'extrémité radiale interne (26a) de chaque aile (26) est en appui axial contre une paroi associée (34, 36) de la gorge (24),
l'agencement comportant une butée cylindrique (42) agencée au niveau de l'ouverture (32) de la gorge (24), contre laquelle le joint (22) est apte à venir en butée radialement vers l'intérieur,
**caractérisé en ce que** la butée (42) est un élément rapporté sur l'une des deux parois (34, 36) de la gorge (24) et **en ce que** le joint (22) est monté dans la gorge (24) de manière que le talon (28) du joint (22)est situé radialement à distance du fond de la gorge annulaire (24).

2. Agencement selon la revendication précédente, **caractérisé en ce que** le joint (22) est apte à se dilater ou se comprimer radialement dans la gorge (24) de manière telle que le talon (28) du joint (22) est continuellement à distance du fond de la gorge (24).

3. Agencement selon la revendication 1 ou 2, **caractérisé en ce que** la butée (42) est agencée radialement au niveau de l'ouverture annulaire de la gorge (24).

4. Agencement selon l'une quelconque des revendications précédentes, **caractérisé en ce que** la distance axiale (L) entre une face d'extrémité axiale (56) de l'extrémité radiale interne (26a) de chaque aile (26) et un plan radial médian (P) du joint (22) est de environ 1,14 fois la distance radiale (H) entre une face d'extrémité radiale externe (44) du talon (28) et une face d'extrémité radiale interne (54) de ladite extrémité radiale libre (26a) de chaque aile (26).

5. Agencement selon l'une quelconque des revendications précédentes, **caractérisé en ce que** le diamètre externe du joint (22) est égal à environ 500 millimètres.

6. Agencement selon l'une quelconque des revendications précédentes, **caractérisé en ce que** la face conique axialement interne (50) de chaque aile (26) est inclinée d'un angle (A1) d'environ 41 degrés par rapport à une direction axiale et la face conique axialement externe (52) de chaque aile (26) est inclinée d'un angle (A2) d'environ 45 degrés par rapport à un plan radial.

7. Assemblage étanche d'une première bride (12) annulaire avec une deuxième bride (14) annulaire de manière telle que les brides (14, 16) sont en contact axialement l'une avec l'autre, par rapport à un axe principal commun, au niveau de faces d'appui (18, 20) radiales respectives, les brides (14, 16) délimitant une gorge (24) annulaire ouverte radialement vers l'intérieur, dont la section de la gorge (24), selon un plan radial est en forme de trapèze globalement isocèle, dont la petite base (30) du trapèze constitue une génératrice d'un fond cylindrique de la gorge (24), la grande base (32) du trapèze correspond à l'ouverture de la gorge (24), au niveau de laquelle la gorge (24) est débouchante radialement et dont chaque côté (34, 36) du trapèze forme une paroi de la gorge (24) qui est formée dans l'une des deux brides (14, 16) annulaires,
**caractérisé en ce qu'**il comporte un joint (22) agencé dans ladite gorge (24) annulaire selon un agencement selon l'une quelconque des revendications précédentes.

## Patentansprüche

1. Anordnung einer ringförmigen doppelt konischen Dichtung (22) mit einem Querschnitt in Form eines liegenden V in einer ringförmigen Ausnehmung (24) mit trapezförmigem Querschnitt, wobei die kleine Grundfläche (30) des Trapez dem zylindrischen Boden der Ausnehmung (24) entspricht, und die radial zu dem Innenraum auf dem Niveau der großen Grundfläche (32) des Trapez geöffnet ist,
wobei die Dichtung (22) einen ringförmigen radial äußeren Absatz (28) und zwei ringförmige, im Ganzen konische Flügel (26) umfasst, welche sich radial zu dem Innenraum von dem Absatz (28) erstrecken, wobei das radial innere Ende (26a) von jedem Flügel (26) in axialer Anlage gegen eine zugeordnete Wand (34, 36) der Ausnehmung (24) ist,
wobei die Anordnung einen zylindrischen Anschlag (42) umfasst, welcher auf dem Niveau der Öffnung (32) der Ausnehmung (24) angeordnet ist, gegen den die Dichtung (22) in radialen Anschlag in Richtung des Innenraums kommen kann,
**dadurch gekennzeichnet, dass** der Anschlag (42) ein an einer der beiden Wände (34, 36) der Ausnehmung (24) angebrachtes Element ist und in der Ausnehmung (24) derart montiert ist, dass der Absatz (28) der Dichtung (22) radial beabstandet von dem Boden der ringförmigen Ausnehmung (24) platziert ist.

2. Anordnung nach dem vorhergehenden Anspruch, **dadurch gekennzeichnet, dass** die Dichtung (22) in der Lage ist, sich in der Ausnehmung (24) derart radial auszudehnen oder zusammenzuziehen, dass der Absatz (28) der Dichtung (22) dauerhaft von dem Boden der Ausnehmung (24) beabstandet ist.

3. Anordnung nach Anspruch 1 oder 2, **dadurch gekennzeichnet, dass** der Anschlag (42) radial auf dem Niveau der ringförmigen Öffnung der Ausnehmung (24) angeordnet ist.

4. Anordnung nach einem der vorhergehenden Ansprüche, **dadurch gekennzeichnet, dass** der axiale Abstand (L) zwischen einer axialen Endfläche (56) des radialen inneren Endes (26a) von jedem Flügel (26) und einer radialen Mittelebene (P) der Dichtung (22) in etwa 1,14 mal den radialen Abstand (H) zwischen einer radialen äußeren Endfläche (44) des Absatzes (28) und einer radialen inneren Endfläche (54) des radialen freien Endes (26) von jedem Flügel (26) beträgt.

5. Anordnung nach einem der vorhergehenden Ansprüche, **dadurch gekennzeichnet, dass** der äußere Durchmesser der Dichtung (22) gleich etwa 500 Millimeter beträgt.

6. Anordnung nach einem der vorhergehenden Ansprüche, **dadurch gekennzeichnet, dass** die konische axial innere Fläche (50) von jedem Flügel (26) um einen Winkel (A1) von etwa 41 Grad gegenüber einer axialen Richtung geneigt ist und die konische axial äußere Fläche (52) von jedem Flügel (26) um einen Winkel (A2) von etwa 45 Grad gegenüber einer radialen Ebene geneigt ist.

7. Dichte Anordnung eines ersten ringförmigen Flanschs (12) mit einem zweiten ringförmigen Flansch (14) derart, dass die Flansche (14, 16) in axialem Kontakt miteinander bezüglich einer gemeinsamen Hauptachse auf dem Niveau von jeweiligen radialen Anlageflächen (18, 20) sind, wobei die Flansche (14, 16) eine ringförmige Ausnehmung (24) begrenzen, welche radial nach innen offen ist, wobei der Querschnitt der Ausnehmung (24) entlang einer radialen Ebene in Form eines im Ganzen gleichschenkligen Trapez ist, wobei die kleine Grundfläche (30) des Trapez eine Erzeugende eines zylindrischen Bodens der Ausnehmung (24) bildet, die große Grundfläche (32) des Trapez der Öffnung der Ausnehmung (24) auf dem Niveau entspricht, auf welchem die Ausnehmung (24) radial mündet und wobei jede Seite (34, 36) des Trapez eine Wand der Ausnehmung (24) bildet, welche in einem der beiden ringförmigen Flansche (14, 16) gebildet ist,
**dadurch gekennzeichnet, dass** sie eine Dichtung (22), welche in der ringförmigen Ausnehmung (24) angeordnet ist, gemäß einer Anordnung nach einem der vorhergehenden Ansprüche umfasst.

## Claims

1. An arrangement of a biconical annular joint (22) having a laid down V shaped cross-section, in an annular groove (24) having a trapezium shaped cross-section, the small base (30) of the trapezium corresponding to the cylindrical bottom of the groove (24) and being radially inwardly open at the great base (32) of the trapezium,
wherein the joint (22) includes a radially outer annular heel (28) and two generally conical annular wings (26) extending radially inwardly from the heel (28) the inner radial end (26a) of each wing (26) being axially bearing against an associated wall (34, 36) of the groove (24),
the arrangement including a cylindrical stop (42) arranged at the aperture (32) of the groove (24), against which the joint (22) is able to radially inwardly abut,
**characterised in that** the stop (42) is an element attached to one of both walls (34, 36) of the groove (24) and **in that** the joint (22) is mounted in the groove (24) such that the heel (28) of the joint (22) is located radially distal to the bottom of the annular groove (24).

2. The arrangement according to the preceding claim, **characterised in that** the joint (22) is able to be radially expanded or compressed in the groove (24) such that the heel (28) of the joint (22) is continuously distal to the bottom of the groove (24).

3. The arrangement according to claim 1 or 2, **characterised in that** the stop (42) is radially arranged at the annular aperture of the groove (24).

4. The arrangement according to any of the preceding claims, **characterised in that** the axial distance (L) between an axial end face (56) of the inner radial end (26a) of each wing (26) and a median radial plane (P) of the joint (22) is about 1.14 times the radial distance (H) between an outer radial end face (44) of the heel (28) and an inner radial end face (54) of said free radial end (26a) of each wing (26).

5. The arrangement according to any of the preceding claims, **characterised in that** the outside diameter of the joint (22) is equal to about 500 millimetres.

6. The arrangement according to any of the preceding claims, **characterised in that** the axially inner conical face (50) of each wing (26) is tilted at an angle (A1) of about 41 degrees with respect to an axial direction and the axially outer conical face (52) of each wing (26) is tilted at an angle (A2) of about 45 degrees with respect to a radial plane.

7. A tight assembly of a first annular flange (12) with a second annular flange (14) such that the flanges (14, 16) are axially contacting each other, with respect to a common main axis, at respective radial bearing faces (18, 20), the flanges (14, 16) bounding a radially inwardly open annular groove (24), the cross-section of the groove (24), along a radial plane being generally isosceles trapezium shaped, the small base (30) of the trapezium making up a generatrix of a cylindrical bottom of the groove (24), the great base (32) of the trapezium corresponding to the aperture of the groove (24), at which the groove (24) is radially opening and each side (34, 36) of the trapezium forming a wall of the groove (24) which is formed in one of both annular flanges (14, 16),
**characterised in that** it includes a joint (22) arranged in said annular groove (24) according to an arrangement according to any of the preceding claims.
